(19) Europäisches Patentamt
European Patent Office
Office européen des brevets

(11) **EP 2 245 751 B1**

(12) **FASCICULE DE BREVET EUROPEEN**

(45) Date de publication et mention
de la délivrance du brevet:
**28.12.2011 Bulletin 2011/52**

(21) Numéro de dépôt: **09705285.6**

(22) Date de dépôt: **29.01.2009**

(51) Int Cl.:
**H04B 1/69** (2011.01)     **H04L 1/06** (2006.01)

(86) Numéro de dépôt international:
**PCT/EP2009/050986**

(87) Numéro de publication internationale:
**WO 2009/095430 (06.08.2009 Gazette 2009/32)**

(54) **PROCÉDÉ DE CODAGE SPATIO-TEMPOREL À FAIBLE PAPR POUR SYSTÈME DE COMMUNICATION MULTI-ANTENNE DE TYPE UWB IMPULSIONNEL**

VERFAHREN ZUR RÄUMLICH-ZEITLICHEN CODIERUNG MIT NIEDRIGEN PAPR FÜR EIN MEHRANTENNEN-KOMMUNIKATIONSSYSTEM DES IMPULS-UWB-TYPS

METHOD OF SPATIO-TEMPORAL CODING WITH LOW PAPR FOR MULTI-ANTENNA COMMUNICATION SYSTEM OF PULSE UWB TYPE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **31.01.2008 FR 0850598**

(43) Date de publication de la demande:
**03.11.2010 Bulletin 2010/44**

(73) Titulaire: **Commissariat à l'Énergie Atomique et aux Énergies Alternatives**
**75015 Paris (FR)**

(72) Inventeur: **ABOU RJEILY, Chadi**
**Byblos (LB)**

(74) Mandataire: **Ilgart, Jean-Christophe et al**
**BREVALEX**
**95 rue d'Amsterdam**
**75378 Paris Cedex 8 (FR)**

(56) Documents cités:
• **ABOU-RJEILY C ET AL: "On Space-Time Coding With Pulse Position and Amplitude Modulations for Time-Hopping Ultra-Wideband Systems" IEEE TRANSACTIONS ON INFORMATION THEORY, IEEE, US, vol. 53, no. 7, 1 juillet 2007 (2007-07-01), pages 2490-2509, XP011186163 ISSN: 0018-9448**
• **RAJAN B S ET AL: "Full-diversity, high-rate space-time block codes from division algebras" IEEE TRANSACTIONS ON INFORMATION THEORY, IEEE, US, vol. 49, no. 10, 1 octobre 2003 (2003-10-01), pages 2596-2616, XP011102239 ISSN: 0018-9448 cité dans la demande**

**Description**

**DOMAINE TECHNIQUE**

La présente invention concerne à la fois le domaine des télécommunications en ultra-large bande ou UWB (*Ultra Wide Band*) et celui des systèmes multi-antenne à codage spatio-temporel ou STC (*Space Time Coding*).

**ÉTAT DE LA TECHNIQUE ANTÉRIEURE**

Les systèmes de télécommunication sans fil de type multi-antenne sont bien connus de l'état de la technique. Ces systèmes utilisent une pluralité d'antennes à l'émission et/ou à la réception et sont dénommés, selon le type de configuration adoptée, MIMO (*Multiple Input Multiple Output*), MISO (*Multiple Input Single Output*) ou SIMO (*Single Input Multiple Output*). Par la suite nous emploierons le même terme MIMO pour couvrir les variantes MIMO et MISO précitées. L'exploitation de la diversité spatiale à l'émission et/ou à la réception permet à ces systèmes d'offrir des capacités de canal nettement supérieures à celles des systèmes mono-antenne classique (ou SISO pour Single Input Single Output). Cette diversité spatiale est généralement complétée par une diversité temporelle au moyen d'un codage spatio-temporel. Dans un tel codage, un symbole d'information à transmettre se trouve codé sur plusieurs antennes et plusieurs instants de transmission. On connaît deux grandes catégories de systèmes MIMO à codage spatio-temporel : les systèmes à codage en treillis ou STTC (*Space Time Trellis Coding*) et les systèmes à codage par blocs ou STBC (*Space Time Block Coding*). Dans un système à codage en treillis, le codeur spatio-temporel peut être vu comme une machine à états finis fournissant $P$ symboles de transmission aux $P$ antennes en fonction de l'état courant et du symbole d'information à coder. Le décodage à la réception est réalisé par un algorithme de Viterbi multidimensionnel dont la complexité augmente de manière exponentielle en fonction du nombre d'états. Dans un système à codage par blocs, un bloc de symboles d'information à transmettre est codé en une matrice de symboles de transmission, une dimension de la matrice correspondant au nombre d'antennes et l'autre correspondant aux instants consécutifs de transmission.

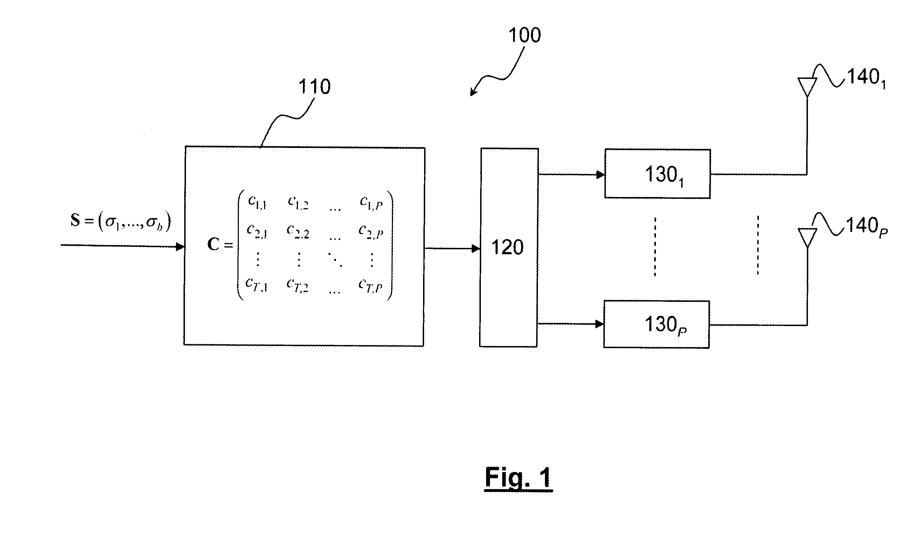

La Fig. 1 représente schématiquement un système de transmission MIMO 100 avec codage STBC. Un bloc de symboles d'information $\mathbf{S}=(\sigma_1,...,\sigma_b)$, par exemple un mot binaire de $b$ bits ou plus généralement de $b$ symboles $M$-aires, est codé en une matrice spatio-temporelle :

$$\mathbf{C} = \begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix} \qquad (1)$$

où les coefficients $c_{t,p}$, $t = 1,.., T$; $p = 1,.., P$ du code sont en règle générale des coefficients complexes dépendant des symboles d'information, $P$ est le nombre d'antennes utilisées à l'émission, $T$ est un entier indiquant l'extension temporelle du code, c'est-à-dire le nombre d'utilisations du canal ou PCUs (*Per Channel Use*).

La fonction $f$ qui, à tout vecteur $\mathbf{S}$ de symboles d'information, fait correspondre le mot de code spatio-temporel $\mathbf{C}$, est appelée fonction de codage. Si la fonction $f$ est linéaire on dit que le code spatio-temporel est linéaire. Si les coefficients $c_{1,p}$ sont réels, le code spatio-temporel est dit réel.

Sur la Fig. 1, on a désigné par 110 un codeur spatio-temporel. A chaque instant d'utilisation de canal $t$, le codeur fournit au multiplexeur 120 le t-ème vecteur-ligne de la matrice $\mathbf{C}$. Le multiplexeur transmet aux modulateurs $130_1,...,130_P$ les coefficients du vecteur ligne et les signaux modulés sont transmis par les antennes $140_1,...,140_P$.

Le code spatio-temporel est caractérisé par sa diversité qui peut être définie comme le rang de la matrice $\mathbf{C}$. On aura une diversité maximale si pour deux mots de code $\mathbf{C}_1$ et $\mathbf{C}_2$ quelconques correspondant à deux vecteurs $\mathbf{S}_1$ et $\mathbf{S}_2$, la matrice $\mathbf{C}_1 - \mathbf{C}_2$ est de rang plein.

Le code spatio-temporel est en outre caractérisé par son gain de codage qui traduit la distance minimale entre différents mots du code. On peut le définir comme :

$$\min_{\mathbf{C_1}\neq\mathbf{C_2}} \det\!\left((\mathbf{C_1}-\mathbf{C_2})^H(\mathbf{C_1}-\mathbf{C_2})\right) \qquad (2)$$

ou, de manière équivalente, pour un code linéaire :

$$\min_{\mathbf{C}\neq0} \det\!\left(\mathbf{C^H C}\right) \qquad (3)$$

où **det(C)** signifie le déterminant de **C** et **C$^H$** est la matrice conjuguée transposée de **C**. Pour une énergie de transmission par symbole d'information, le gain de codage est borné.

Un code spatio-temporel sera d'autant plus résistant à l'évanouissement que son gain de codage sera élevé.

Le code spatio-temporel est enfin caractérisé par son débit, c'est-à-dire par le nombre de symboles d'information qu'il transmet par instant d'utilisation de canal (PCU). Le code est dit à plein débit s'il est *P* fois plus élevé que le débit relatif à une utilisation mono-antenne (SISO). Un code est dit à débit unitaire s'il est identique à celui relatif à une utilisation mono-antenne.

Un exemple de code spatio-temporel à diversité maximale et débit unitaire pour un système MIMO possédant un nombre quelconque d'antennes a été proposé dans l'article de B.A. Sethuraman et al. Intitulé « Full-diversity, high-rate space-time block codes from division algebras » publié dans IEEE Trans. on Information Theory, vol. 49, N°10, Oct. 2003, pages 2596-2616. Ce code est défini par la matrice spatio-temporelle suivants :

$$\boldsymbol{\sigma_\gamma} = \begin{bmatrix} \sigma_1 & \sigma_2 & \cdots & \sigma_P \\ \gamma\sigma_P & \sigma_1 & \ddots & \vdots \\ \vdots & \ddots & \ddots & \sigma_2 \\ \gamma\sigma_2 & \cdots & \gamma\sigma_P & \sigma_1 \end{bmatrix} \qquad (4)$$

où $\sigma_1,...,\sigma_P$ sont des symboles d'information, par exemple des symboles PAM. Pour que le code spatio-temporel défini par la matrice (4) soit réel, il faut que le coefficient $\gamma$ soit lui-même réel et si l'on souhaite, de surcroît, ne pas accroître le taux de puissance crête sur puissance moyenne ou PAPR (*Peak-to-Average Power Ratio*) par rapport à un système mono-antenne, cela suppose que $\gamma=\pm1$. Or, la diversité maximale du code est perdue pour $\gamma=1$ et n'est atteinte pour $\gamma=-1$ que dans le cas où nombre d'antennes *P* est une puissance de 2.

Un autre domaine des télécommunications fait actuellement l'objet de recherches considérables. Il s'agit des systèmes de télécommunication UWB, pressentis notamment pour le développement des futurs réseaux personnels sans fil (WPAN). Ces systèmes ont pour spécificité de travailler directement en bande de base avec des signaux très large bande. On entend généralement par signal UWB un signal conforme au masque spectral stipulé dans la réglementation du FCC du 14 Février 2002 et révisé en Mars 2005, c'est-à-dire pour l'essentiel un signal dans la bande spectrale 3.1 à 10.6 GHz et présentant une largeur de bande d'au moins 500 MHz à -10dB. En pratique, on connaît deux types de signaux UWB, les signaux multi-bande OFDM (MB-OFDM) et les signaux UWB de type impulsionnel. Nous nous intéresserons par la suite uniquement à ces derniers.

Un signal UWB impulsionnel est constitué d'impulsions très courtes, typiquement de l'ordre de quelques centaines de picosecondes, réparties au sein d'une trame. Afin de réduire l'interférence multi-accès (MAI pour *Multiple Access Interference*), un code de sauts temporels (TH pour *Time Hopping*) distinct est affecté à chaque utilisateur. Le signal issu ou à destination d'un utilisateur *k* peut alors s'écrire sous la forme :

$$s_k(t) = \sum_{n=0}^{N_s-1} w(t - nT_s - c_k(n)T_c) \qquad (5)$$

où $w$ est la forme de l'impulsion élémentaire, $T_c$ est une durée bribe (ou chip), $T_s$ est la durée d'un intervalle élémentaire avec $N_s = N_c T_c$ où $N_c$ est le nombre de chips dans un intervalle, la trame totale étant de durée $T_f = N_s T_s$ où $N_s$ est le nombre d'intervalles dans la trame. La durée de l'impulsion élémentaire est choisie inférieure à la durée chip, soit $T_w \leq T_c$. La séquence $c_k(n)$ pour $n=0,..,N_s$-1 définit le code de saut temporel de l'utilisateur $k$. Les séquences de sauts temporels sont choisies de manière à minimiser le nombre de collisions entre impulsions appartenant à des séquences de saut temporel d'utilisateurs différents.

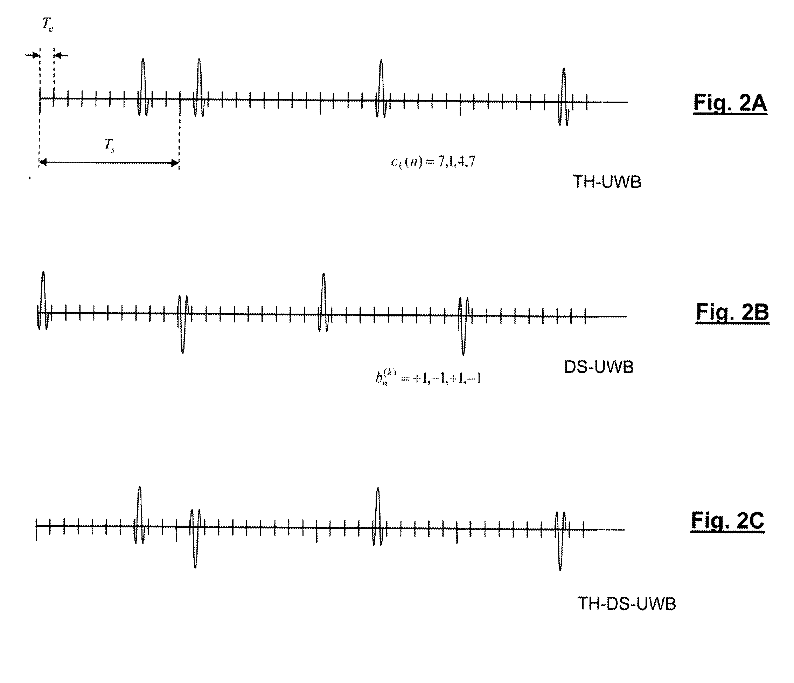

On a représenté en Fig. 2A un signal TH-UWB associé à un utilisateur $k$. Afin de transmettre un symbole d'information donné en provenance ou à destination d'un utilisateur $k$, on module généralement le signal TH-UWB à l'aide d'une modulation de position (PPM pour *Pulse Position Modulation*), soit pour le signal modulé :

$$s_k(t) = \sum_{n=0}^{N_s-1} w(t - nT_s - c_k(n)T_c - d_k\varepsilon) \qquad (6)$$

où $\varepsilon$ est un retard de modulation (dither) sensiblement inférieur à la durée chip $T_c$ et $d_k \in \{0,..,M-1\}$ est la position $M$-aire PPM du symbole.

Alternativement, les symboles d'information peuvent être transmis au moyen d'une modulation d'amplitude (PAM). Dans ce cas, le signal modulé peut s'écrire:

$$s_k(t) = \sum_{n=0}^{N_s-1} a^{(k)}.w(t - nT_s - c_k(n)T_c) \qquad (7)$$

où $a^{(k)} = 2m'\text{-}1\text{-}M'$ avec $m' = 1,..,M'$, est le symbole $M'$-aire de la modulation PAM. On peut par exemple utiliser une modulation BPSK ($M'$=2).

Les modulations PPM et PAM peuvent aussi être combinées en une modulation composite $M.M'$-aire. Le signal modulé a alors la forme générale suivants :

$$s_k(t) = \sum_{n=0}^{N_s-1}\sum_{m=0}^{M-1} a_m^{(k)}.w(t - nT_s - c_k(n)T_c - m\varepsilon) \qquad (8)$$

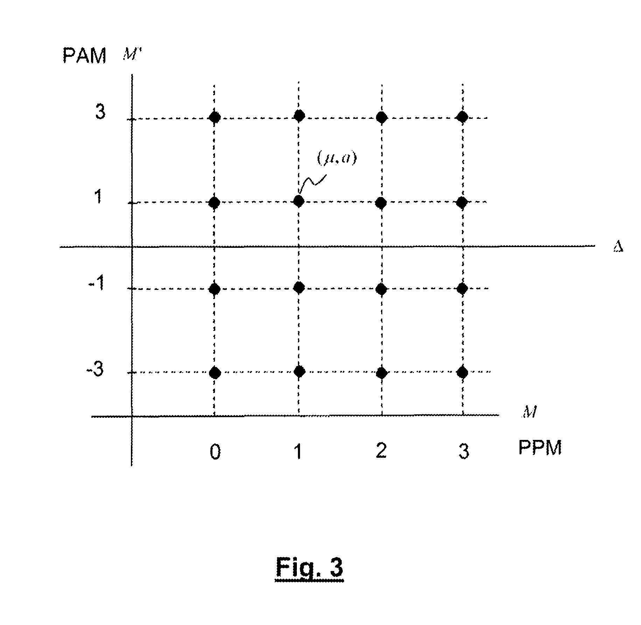

L'alphabet de cette modulation $M$-PPM-$M'$-PAM de cardinal $Q = M.M'$ a été représenté en Fig. 3. Pour chacune des $M$ positions temporelles, $M'$ amplitudes de modulation sont possibles. Un symbole $(\mu,a)$ de cet alphabet peut être représenté par une séquence $a_m$, $m=0,..,M$-1 avec $a_m = \delta(m\text{-}\mu)a$ où $\mu$ est une position de la modulation PPM, $a$ est un élément de l'alphabet $M'$-PAM et $\delta(.)$ la distribution de Dirac.

Au lieu de séparer les différents utilisateurs au moyen de codes de sauts temporels, il est également possible de les séparer par des codes orthogonaux, par exemple des codes de Hadamard, comme en DS-CDMA. On parle alors de DS-UWB (*Direct Spread* UWB). Dans ce cas on a pour l'expression du signal non modulé, correspondant à (5) :

$$s_k(t) = \sum_{n=0}^{N_s-1} b_n^{(k)} w(t - nT_s) \qquad\qquad (9)$$

où $b_n^{(k)}$, $n = 0,..,N_s$ -1 est la séquence d'étalement de l'utilisateur $k$. On remarque que l'expression (9) est analogue à celle d'un signal DS-CDMA classique. Elle en diffère cependant par le fait que les chips n'occupent pas toute la trame mais sont répartis à la période $T_s$. On a représenté en Fig. 2B un signal DS-UWB associé à un utilisateur $k$.

Comme précédemment, les symboles d'information peuvent être transmis au moyen d'une modulation PPM, d'une modulation PAM ou d'une modulation composite PPM-PAM. Le signal DS-UWB modulé en amplitude correspondant au signal TH-UWB (7) peut s'exprimer, en conservant les mêmes notations :

$$s_k(t) = \sum_{n=0}^{N_s-1} a^{(k)} b_n^{(k)} . w(t - nT_s) \qquad\qquad (10)$$

Enfin, il est connu de combiner codes de sauts temporels et codes d'étalement spectral pour offrir des accès multiples aux différents utilisateurs. On obtient ainsi un signal UWB impulsionnel TH-DS-UWB de forme générale :

$$s_k(t) = \sum_{n=0}^{N_s-1} b_n^{(k)} . w(t - nT_s - c_k(n)T_c) \qquad\qquad (11)$$

On a représenté en Fig. 2C un signal TH-DS-UWB associé à un utilisateur $k$. Ce signal peut être modulé par une modulation composite PPM-PAM $M.M'$-aire. On obtient alors pour le signal modulé :

$$s_k(t) = \sum_{n=0}^{N_s-1} \sum_{m=0}^{M-1} a_m^{(k)} b_n^{(k)} . w(t - nT_s - c_k(n)T_c - m\varepsilon) \qquad\qquad (12)$$

Il est connu de l'état de la technique d'utiliser des signaux UWB dans des systèmes MIMO. Dans ce cas, chaque antenne transmet un signal UWB modulé en fonction d'un symbole d'information ou d'un bloc de tels symboles (STBC).

Les techniques de codage spatio-temporel initialement développées pour des signaux à bande étroites ou pour le DS-CDMA s'appliquent mal aux signaux UWB impulsionnels. En effet, les codes spatiotemporels connus, tels ceux décrits dans l'article de B.A. Sethuraman précité, sont généralement à coefficients complexes et portent par conséquent une information de phase. Or, il est excessivement difficile de récupérer cette information de phase dans un signal à bande aussi large que celle des signaux UWB impulsionnels.

L'utilisation d'un code réel, par exemple en choisissant γ = ±**1** pour le code défini en (4), peut conduire, comme on l'a vu, à une perte de la diversité maximale. Réciproquement, conserver la propriété de diversité maximale peut conduire à ce que les éléments du code (par exemple les éléments de la matrice $\sigma_\gamma$ avec $|\gamma|\neq 1$) appartiennent à une constellation de modulation amplifiée et/ou tournée par rapport à la constellation à laquelle appartiennent les symboles d'information, d'où une valeur de PAPR plus élevée que dans la configuration mono-antenne.

Le document "On Space-Time Coding With Pulse Position and Amplitude Modulations for Time-Hopping Ultra-Wideband Systems" (IEEE TRANSACTIONS ON INFORMATION THEORY, IEEE, US, vol. 53, no. 7, 1 juillet 2007) décrit un procédé de codage spatio-temporel avec une pluralité d'éléments radiatifs, un alphabet de modulation PPM-PAM et un signal UWB impulsionnel. Le code spatio temporel est défini par une matrice de codage C avec coefficients réels.

Le but de la présente invention est de proposer un code spatio-temporel réel ne présentant pas les inconvénients précités, notamment un niveau de PAPR accru par rapport à une configuration mono-antenne. Un but subsidiaire de la présente invention est de proposer un tel code présentant de surcroît une diversité maximale quel que soit le nombre d'antennes.

## EXPOSÉ DE L'INVENTION

La présente invention est définie par un procédé de codage spatio-temporel pour système de transmission UWB comprenant une pluralité $P$ d'éléments radiatifs, ledit procédé codant un bloc de symboles d'information $\mathbf{S} = (\sigma_1, \sigma_2,...,\sigma_P)$ appartenant à un alphabet de modulation $M$ - PPM-$M'$-PAM avec $M \leq 2$, en une séquence de vecteurs, les composantes d'un vecteur étant destinées à moduler en position et en amplitude un signal UWB impulsionnel pour un élément radiatif dudit système et une utilisation de canal de transmission donné, chaque composante d'un vecteur correspondant à une position de modulation PPM, selon lequel lesdits vecteurs sont obtenus à partir des éléments de la matrice :

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

une ligne de la matrice correspondant à une utilisation du canal de transmission et une colonne de la matrice correspondant à un élément radiatif, la matrice $\mathbf{C}$ étant définie à une permutation près de ses lignes et/ou ses colonnes et $\Omega$ étant définie comme la combinaison d'une permutation des positions de modulation de l'alphabet $M$ -PPM et d'une opération de symétrie de l'alphabet de modulation $M'$-PAM pour l'une des positions de modulation.

Par exemple, ladite opération de permutation est une permutation circulaire desdites positions de modulation, notamment un décalage circulaire desdites positions de modulation.

Selon un mode de réalisation le nombre $P$ d'éléments radiatifs et le nombre $M$ de positions de modulation vérifient $M - d(M) \geq P$ où $d(M)$ est défini par $d(M) = 0$ dans le cas où $M$ est une puissance de 2 et comme le plus grand diviseur de $M$ tel que le rapport $M/d(M)$ soit impair, dans les autres cas.

Selon une variante, $M'$=1, les symboles $\sigma_1,\sigma_2,...,\sigma_P$ appartiennent au dit alphabet de modulation $M$-PPM. Les symboles $\sigma_2,...,\sigma_P$ peuvent alors occuper toutes les positions de modulation hormis celle ($m_\pm$) à laquelle s'applique ladite opération de symétrie.

Les éléments radiatifs peuvent être des antennes UWB, des diodes laser ou des diodes électroluminescentes.

Ledit signal impulsionnel peut être un signal TH-UWB, un signal DS-UWB ou un signal TH-DS-UWB.

La présente invention concerne aussi un système de transmission UWB comprenant une pluralité d'éléments radiatifs, comprenant :

- des moyens de codage pour coder un bloc de symboles d'information $\mathbf{S} = (\sigma_1,\sigma_2,...,\sigma_p)$ appartenant à un alphabet de modulation M-PPM-M'-PAM avec $M \geq 2$, en une séquence de vecteurs, chaque vecteur étant associé à une utilisation du canal de transmission et un élément radiatif donné, chaque composante d'un vecteur correspondant à une position de modulation PPM, lesdits vecteurs étant obtenus à partir des éléments de la matrice :

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

une ligne de la matrice correspondant à une utilisation de canal de transmission et une colonne de la matrice correspondant à un élément radiatif, la matrice **C** étant définie à une permutation près de ses lignes et/ou ses colonnes et Ω étant définie comme la combinaison d'une permutation des positions de modulation de l'alphabet $M$ -PPM et d'une opération de symétrie de l'alphabet de modulation $M'$-PAM pour l'une des positions de modulation ;

- une pluralité de modulateurs pour moduler en position et en amplitude un signal UWB impulsionnel, chaque modulateur étant associé à un élément radiatif et modulant en position et en amplitude ledit signal, pendant une utilisation du canal de transmission, à l'aide des composantes du vecteur associé au dit élément radiatif et à ladite utilisation du canal ;

- chaque élément radiatif étant adapté à émettre le signal ainsi modulé par ledit modulateur associé.

Selon un mode de réalisation, le nombre $P$ d'éléments radiatifs et le nombre $M$ de positions de modulation vérifient $M - d(M) \geq P$ où $d(M)$ est défini par $d(M) = 0$ dans le cas où $M$ est une puissance de 2 et comme le plus grand diviseur de $M$ tel que le rapport $M / d(M)$ soit impair, dans les autres cas.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

la Fig. 1 représente schématiquement un système de transmission MIMO avec codage STBC connu de l'état de la technique ;
les Figs. 2A à 2C représentent les formes respectives de signaux TH-UWB, DS-UWB et TH-DS-UWB ;
la Fig. 3 représente un exemple de constellation $M$-PPM-$M'$-PAM ;
la Fig. 4 représente schématiquement un système de transmission UWB multi-antenne selon un mode de réalisation de l'invention.

## EXPOSÉ DÉTAILLÉ DE MODES DE RÉALISATION PARTICULIERS

L'idée à la base de l'invention est d'utiliser des symboles d'information appartenant à une constellation de modulation $M$-PPM-$M'$-PAM avec $M \geq 2$ et $M' \geq 1$, et de construire un code spatio-temporel à partir d'une opération de permutation des positions de modulation de l'alphabet $M$-PPM et d'une opération de symétrie de l'alphabet PAM.
On considèrera dans la suite un système de transmission UWB à $P$ antennes de transmission et plus généralement, comme on le verra plus loin, à $P$ éléments radiatifs. Le code spatio-temporel utilisé par le système est défini, en gardant les mêmes conventions de notation, par la matrice suivante, de dimension $PM \times P$ :

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix} \qquad (13)$$

où $\sigma_1, \sigma_2, ..., \sigma_P$ sont les symboles d'information $M$-PPM-$M'$-PAM à transmettre, représentés sous la forme de vecteurs colonne de dimension $M$ dont les composantes sont toutes nulles à l'exception d'une seule appartenant à l'alphabet $M'$-PAM.
De manière générale, toute permutation sur les lignes (on entend ici par ligne, une ligne de vecteurs) et/ou les colonnes de **C** est un code spatio-temporel selon l'invention, une permutation sur les lignes équivalant à une permutation des instants d'utilisation du canal (PCUs) et une permutation sur les colonnes équivalant à une permutation des antennes de transmission.
La matrice Ω, de taille $M \times M$, représente la combinaison d'une opération de permutation ω des positions de modulation de l'alphabet $M$-PPM et d'une opération de symétrie (ou de retournement) π de l'alphabet $M'$-PAM pour l'une des positions de modulation. L'opération de retournement peut précéder ou suivre l'opération de permutation, c'est-à-dire respectivement Ω=ωοπ ou Ω=ποω. On appelle permutation des positions de modulation toute bijection de l'ensemble des positions de modulation {0,..., $M$ -1} sur lui-même, à l'exception de l'identité. On appelle opération de symétrie ou de retournement de l'alphabet $M'$-PAM l'opération π telle que : $\pi(a) = -a$ où $a \in \{2m'-1-M' | m'=1,...,M'\}$. On a représenté sur la Fig. 3 l'axe $\Delta$ de la symétrie l'alphabet $M$-PAM, étant entendu que le retournement autour de cet axe n'est effectué que pour l'une des positions PPM seulement.

Etant donné que la matrice $\Omega$ est unitaire, l'énergie moyenne par antenne de transmission est la même pour toutes les antennes de transmission.

Les composantes des symboles d'information $\sigma_\ell$ étant réelles, le code spatio-temporel défini par (13) est réel. Du fait de l'absence de contraintes sur les symboles d'information, $P$ symboles indépendants sont transmis pendant $P$ PCUs et le débit du code spatio-temporel est par conséquent unitaire.

A titre d'exemple, si l'opération de permutation $\omega$ précitée est un simple décalage circulaire, la matrice $\Omega$ peut s'écrire:

$$\Omega = \begin{pmatrix} \mathbf{0}_{1 \times M-1} & -1 \\ \mathbf{I}_{M-1 \times M-1} & \mathbf{0}_{M-1 \times 1} \end{pmatrix} = \begin{pmatrix} 0 & 0 & \cdots & 0 & -1 \\ 1 & 0 & \cdots & 0 & 0 \\ 0 & 1 & 0 & \ddots & \vdots \\ \vdots & \ddots & \ddots & \ddots & 0 \\ 0 & \cdots & 0 & 1 & 0 \end{pmatrix} \qquad (14)$$

où $\mathbf{I}_{M-1 \times M-1}$ est la matrice identité de taille $M$-1, $\mathbf{0}_{1 \times M-1}$ est le vecteur ligne nul de taille $M$-1, $\mathbf{0}_{M-1 \times 1}$ le vecteur colonne nul de taille $M$-1. L'opération de retournement est effectuée ici sur la position $M$-1 si elle précède la permutation et sur la position 1 si elle lui succède.

A titre d'illustration, on peut expliciter la forme de la matrice spatiotemporelle (13) dans le cas où $\omega$ est un simple décalage circulaire (14) :

$$\mathbf{C} = \begin{pmatrix} \sigma_{1,0} & \sigma_{2,0} & \cdots & \sigma_{P,0} \\ \sigma_{1,1} & \sigma_{2,1} & \cdots & \sigma_{P,1} \\ \vdots & \vdots & \cdots & \vdots \\ \sigma_{1,M-1} & \sigma_{2,M-1} & \cdots & \sigma_{P,M-1} \\ -\sigma_{P,M-1} & \sigma_{1,0} & \ddots & \vdots \\ \sigma_{P,0} & \sigma_{1,1} & \ddots & \vdots \\ \vdots & \vdots & \ddots & \vdots \\ \sigma_{P,M-2} & \sigma_{1,M-1} & \ddots & \vdots \\ \vdots & \ddots & \ddots & \sigma_{2,0} \\ \vdots & \ddots & \ddots & \sigma_{2,1} \\ \vdots & \ddots & \ddots & \vdots \\ \vdots & \ddots & \ddots & \sigma_{2,M-1} \\ -\sigma_{2,M-1} & \cdots & -\sigma_{P,M-1} & -\sigma_{1,0} \\ \sigma_{2,0} & \cdots & \sigma_{P,0} & \sigma_{1,1} \\ \vdots & \cdots & \vdots & \vdots \\ \sigma_{2,M-2} & \cdots & \sigma_{P,M-2} & \sigma_{1,M-1} \end{pmatrix} \qquad (15)$$

où $\sigma_\ell = (\sigma_{\ell,0} \; \sigma_{\ell,1} \cdots \sigma_{\ell,M-1})^T$, $\ell = 1,..,P$ avec $\sigma_{\ell,m} = a_\ell \delta(m\text{-}\mu_\ell)$ où $\alpha_\ell$ est un élément de l'alphabet $M$-PAM, c'est-à-dire

$\alpha\ell \in \{-M'+1,..,M'-1\}$, $\mu_\ell$ est la position de modulation relative au symbole $\sigma_\ell$ et $\delta$ est le symbole de Dirac. Etant donné que $-\alpha_\ell$ est aussi un élément de l'alphabet $M'$-PAM, $\Omega\sigma_\ell$ est également un élément de l'alphabet de modulation $M$-PPM-$M'$-PAM.

Considérons maintenant le cas particulier où le système est bi-antenne ($P$=2). La matrice **C** a alors la forme suivants :

$$\mathbf{C} = \begin{pmatrix} \sigma_1 & \sigma_2 \\ \Omega\sigma_2 & \sigma_1 \end{pmatrix} \qquad (16)$$

Par définition le code est à diversité maximale si pour tout couple de matrices distinctes **C,C'** du code, $\Delta\mathbf{C}=\mathbf{C}-\mathbf{C'}$ est de rang plein, c'est-à-dire si :

$$\Delta\mathbf{C} = \begin{pmatrix} \mathbf{a}_1 & \mathbf{a}_2 \\ \Omega\mathbf{a}_2 & \mathbf{a}_1 \end{pmatrix} \qquad (17)$$

où $\mathbf{a}_1 = \sigma_1 - \sigma'_1$ et $\mathbf{a}_2 = \sigma_2 - \sigma'_2$, est de rang plein.

La matrice $\Delta\mathbf{C}$ peut s'écrire sous la forme développée :

$$\Delta\mathbf{C} = \begin{pmatrix} a_{1,0} & a_{2,0} \\ \vdots & \vdots \\ a_{1,M-1} & a_{2,M-1} \\ -a_{2,M-1} & a_{1,0} \\ \vdots & \vdots \\ a_{2,M-2} & a_{1,M-1} \end{pmatrix} \qquad (18)$$

où l'on a supposé sans perte de généralité que $\Omega$ a la forme donnée en (14) et $\alpha_{\ell,m} = \sigma_{\ell,m} - \sigma'_{\ell,m}$, $\ell = 1,2$, $m = 0,..,M-1$.

La matrice $\Delta\mathbf{C}$ n'est pas à rang plein si ces deux vecteurs colonne sont colinéaires, c'est-à-dire s'il existe un scalaire $\lambda$ non nul, tel que :

$$a_{1,m} = \lambda a_{2,m} \quad , \quad m = 0,..,M-1 \quad \text{et}$$

$$a_{2,M-1} = -\lambda a_{1,0} \ , \quad a_{2,0} = \lambda a_{1,1} \ , \ ..., \quad a_{2,M-2} = \lambda a_{1,M-1} \qquad (19)$$

On en déduit que :

$$a_{2,M-1} = -\lambda^2 a_{2,0} = -\lambda^4 a_{2,1} = \cdots = -\lambda^{2M} a_{2,M-1}$$

et, de manière plus générale :

$$a_{2.m} = -\lambda^{2M} a_{2.m}, \quad m = 0,...,M-1 \qquad (20)$$

autrement dit, compte tenu du fait que $\lambda$ est réel, les vecteurs $\mathbf{a_1}$ et $\mathbf{a_2}$ sont nécessairement nuls, c'est-à-dire $\mathbf{C}=\mathbf{C}'$.

Le code spatio-temporel est par conséquent à diversité maximale pour $P$=2, quelles que soient les valeurs de $M \geq 2$ et $M' \geq 1$.

De manière plus générale, on peut montrer que pour un nombre d'antennes $P$ donné, la diversité maximale est obtenue dès lors que le nombre de positions de modulation $M$ de l'alphabet $M$-PPM-$M'$-PAM est suffisamment grand, plus précisément dès lors que :

$$M - d(M) \geq P \qquad (21)$$

où $d(M)$ est défini par :

- $d(M) = 0$ si $M$ est une puissance de 2 ;
- $d(M)$ est le plus grand diviseur de $M$ (hormis $M$) tel que le rapport $M / d(M)$ soit impair ;

Par exemple, pour $M = 2^K$, la diversité maximale est atteinte dès lors que le nombre $M$ de positions PPM est supérieur ou égal au nombre $P$ d'antennes.

Selon un second exemple, si $M$ est un nombre premier, $d(M)=1$ et la diversité maximale est obtenue dès lors que $M \geq P+1$.

Il convient de noter que, sous réserve de respecter la contrainte (21), le code spatio-temporel défini par (13) (à une permutation près de ses lignes et de ses colonnes) est à diversité maximale quelle que soit la valeur de $M' \geq 1$.

Il est essentiel de noter que la matrice $\Omega$ laisse invariante la constellation de modulation $M$-PPM-$M'$-PAM dès lors que $M' \geq 2$. Cette propriété garantit que le niveau de PAPR du système MIMO utilisant le code spatio-temporel défini par (13) (à une permutation près de ses lignes et de ses colonnes) est identique à celle d'un système mono-antenne utilisant la même configuration.

Dans le cas particulier $M'=1$, les symboles $M$-PPM-$M'$-PAM sont de *facto* des éléments d'un alphabet $M$-PPM, c'est-à-dire des vecteurs à $M$ composantes, toutes nulles à l'exception d'une égale à 1. Etant donné que la matrice $\Omega$ effectue non seulement une permutation des $M$ positions de modulation mais aussi une opération de symétrie, certains éléments de la matrice $\mathbf{C}$ peuvent avoir une composante égale à -1, d'où une extension de la constellation de modulation initiale et un accroissement du niveau de PAPR par rapport à une configuration mono-antenne. Cependant, le niveau de PAPR peut être maintenu identique au prix d'une légère diminution du débit du système.

En effet, si l'on note $m_{\pm}$ la position PPM pour laquelle l'opération de retournement $\pi$ s'applique, il suffit de prévoir que les symboles $\sigma_{\mathbf{2}},..,\sigma_{\mathbf{P}}$ ne puissent avoir une composante égale à 1 en position $m_{\pm}$. A contrario, le symbole $\sigma_{\mathbf{1}}$ n'étant pas multiplié par la matrice $\Omega$, il n'est pas soumis à cette contrainte. Par exemple, si la matrice $\Omega$ a la forme donnée en (14), les symboles $\sigma_{\mathbf{2}},...,\sigma_{\mathbf{P}}$ ne pourront occuper la position de modulation $m_{\pm} = M$-1.

Le débit du code, exprimé en nombre de bits par PCU se réduit alors à :

$$R = \frac{\log_2(M) + (P-1)\log_2(M-1)}{P\log_2(M)} \qquad (22)$$

Le terme au dénominateur représente le débit relatif à $P$ systèmes mono-antennes. Le terme $(P-1)\log_2(M-1)$ au numérateur correspond à la contribution des symboles $\sigma_{\mathbf{2}},..,\sigma_{\mathbf{P}}$, le terme $\log_2(M)$ correspondant à la contribution du symbole $\sigma_{\mathbf{1}}$.

On notera que $R \leq 1$ et que $R$ est une fonction croissante de $M$ et une fonction décroissante de $P$. Par suite, pour un nombre donné $P$ d'antennes, si le code spatio-temporel $\mathbf{C}$ utilise des symboles $M$-PPM (autrement dit si $M'$=1), le débit du code sera quasi-unitaire pour un nombre de positions de modulation élevé. A titre d'exemple, pour un système MIMO à deux antennes, on atteint un débit $R$=0.97 pour un alphabet de modulation 8-PPM.

Considérons maintenant le cas d'un système de transmission MIMO à deux antennes utilisant un code spatio-temporel selon l'invention tel que $C = \begin{pmatrix} \sigma_1 & \sigma_2 \\ \Omega\sigma_2 & \sigma_1 \end{pmatrix}$. Nous supposerons en outre que le système utilise un signal TH-UWB, tel que défini en (8). Le code spatio-temporel module ce signal et est transmis pendant deux utilisations consécutives du canal (PCU). Pendant la première utilisation, l'antenne 1 transmet une première trame, soit avec les notations de (8) et (15) :

$$s_1(t) = \sum_{n=0}^{N_s-1} \sum_{m=0}^{M-1} \sigma_{1,m} w(t - nT_s - c_k(n)T_c - m\varepsilon) = \sum_{n=0}^{N_s-1} \sigma_{1,\mu_1} w(t - nT_s - c(n)T_c - \mu_1\varepsilon)$$

$$(23)$$

où $\mu_1$ est la position de modulation relative au symbole $\sigma_1$ ;
et l'antenne 2 transmet simultanément une première trame :

$$s_2(t) = \sum_{n=0}^{N_s-1} \sum_{m=0}^{M-1} \sigma_{2,m} w(t - nT_s - c(n)T_c - m\varepsilon) = \sum_{n=0}^{N_s-1} \sigma_{2,\mu_2} w(t - nT_s - c(n)T_c - \mu_2\varepsilon)$$

$$(24)$$

où $\mu_2$ est la position de modulation relative au symbole $\sigma_2$.

Pendant la seconde utilisation du canal, l'antenne 1 transmet une seconde trame :

$$s_1(t) = \sum_{n=0}^{N_s-1} \sum_{m=0}^{M-1} -\sigma_{2,\omega'(m)} w(t - nT_s - c(n)T_c - m\varepsilon)$$
$$= \sum_{n=0}^{N_s-1} -\sigma_{2,\omega(\mu_2)} w(t - nT_s - c(n)T_c - \omega(\mu_2)\varepsilon)$$

$$(25)$$

où $\omega$ est la permutation de l'ensemble {0,1,.., $M$-1} associée à $\Omega=\omega o\pi$ (où « o » est l'opération de composition) et $\omega'=\omega^{-1}$ ;
et l'antenne 2 transmet simultanément une seconde trame :

$$s_2(t) = \sum_{n=0}^{N_s-1} \sum_{m=0}^{M-1} \sigma_{1,m} w(t - nT_s - c(n)T_c - m\varepsilon) = \sum_{n=0}^{N_s-1} \sigma_{1,\mu_1} w(t - nT_s - c(n)T_c - \mu_1\varepsilon)$$

$$(26)$$

Il est clair pour l'homme du métier que l'on obtiendrait des expressions similaires en utilisant un signal DS-TH-UWB selon l'expression (9) au lieu d'un signal TH-UWB selon l'expression (8).

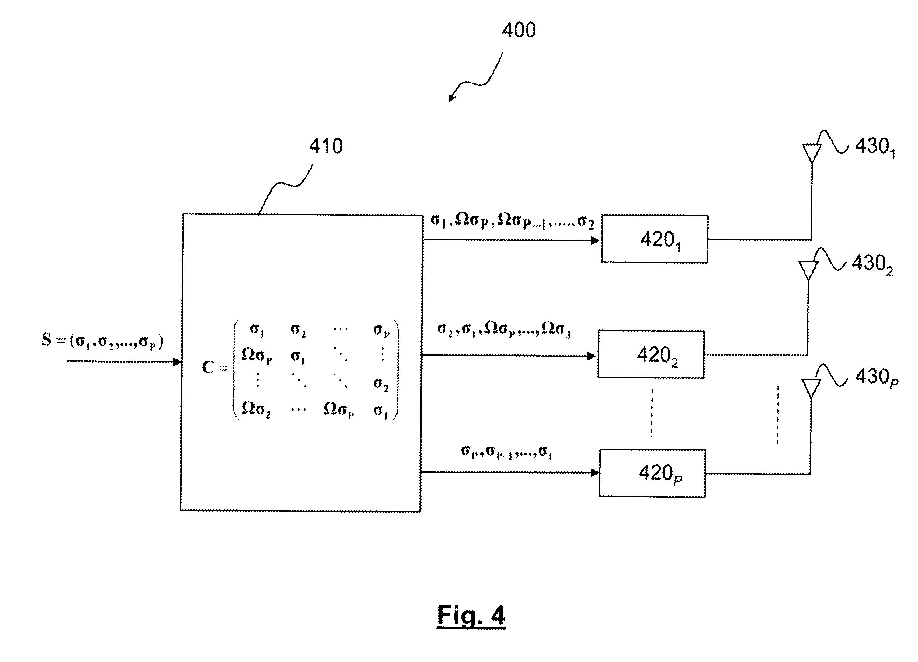

La Fig. 4 illustre un exemple de système de transmission utilisant le codage spatio-temporel selon l'invention.

Le système 400 reçoit des symboles d'information par bloc $\mathbf{S}=(\sigma_1,\sigma_2,...,\sigma_P)$ où les $\sigma_\ell$, $\ell = 1,..,P$ avec $P > 1$ sont des symboles d'une constellation $M$-PPM-$M'$-PAM. Alternativement, les symboles d'information peuvent provenir d'une autre constellation $Q$-aire avec $Q=MM'$ à condition de subir préalablement un transcodage (*mapping*) dans ladite constellation $M$-PPM-$M'$-PAM. Les symboles d'information peuvent être issus d'une ou d'une pluralité d'opérations bien connues de l'homme du métier telles que codage source, codage canal de type convolutionnel, par bloc ou bien encore turbocodage série ou parallèle, entrelacement, etc.

Le bloc de symboles d'information $\mathbf{S} = (\sigma_1,\sigma_2,...,\sigma_P)$ subit une opération de codage dans le codeur spatio-temporel 410. Plus précisément, le module 410 calcule les coefficients de la matrice $\mathbf{C}$ obéissant à l'expression (13) ou à une variante obtenue par permutation de ses lignes et/ou ses colonnes comme indiqué précédemment. Les $P$ vecteurs colonnes (vecteurs à $M$ composantes) de la première ligne de $\mathbf{C}$, représentant $P$ symboles PPM sont transmis respectivement aux modulateurs UWB $420_1$,..., $420_P$ pour générer la première trame, puis les $P$ vecteurs colonnes de la seconde ligne de $\mathbf{C}$, pour générer la seconde trame etc. jusqu'à la dernière ligne de vecteurs colonnes pour générer la dernière trame. Le modulateur UWB $420_1$ génère à partir des vecteurs colonnes $\sigma_1$, $\Omega\sigma_P$, $\Omega\sigma_{P-1}$..., $\sigma_2$, les signaux UWB impulsionnels modulés correspondants. De même, le modulateur UWB $420_2$ génère à partir des vecteurs $\sigma_2,\sigma_1,\Omega\sigma_P,...$, $\Omega\sigma_3$ les signaux UWB impulsionnels modulés correspondants, ainsi de suite jusqu'au modulateur UWB $420_P$ à partir des vecteurs $\sigma_P,\sigma_{P-1},...,\sigma_1$.

Par exemple, si l'on utilise, pour un système bi-antenne ($P$=2), la matrice de codage spatio-temporel (13) avec la matrice $\Omega$ définie en (14) et un signal support de modulation de type TH-UWB, le modulateur UWB $320_1$ fournira successivement les signaux (23) et (25) alors que le modulateur UWB $320_2$ fournira successivement les signaux (24) et (26). Les signaux UWB impulsionnels servant de support à la modulation peuvent être alternativement du type DS-UWB ou TH-DS-UWB. Dans tous les cas, les signaux UWB impulsionnels ainsi modulés sont transmis ensuite aux éléments radiatifs $430_1$ à $430_P$. Ces éléments radiatifs peuvent être des antennes UWB ou bien des diodes laser ou des DELs, fonctionnant par exemple dans le domaine infrarouge, associées à des modulateurs électro-optiques. Le système de transmission proposé peut alors être utilisé dans le domaine des télécommunications optiques sans fil.

Les signaux UWB transmis par le système illustré en Fig. 4 peuvent être traités par un récepteur multi-antenne de manière classique. Le récepteur pourra par exemple comprendre un étage de corrélation de type Rake suivi d'un étage de décision, utilisant par exemple un décodeur par sphère connu de l'homme du métier.

## Revendications

**1.** Procédé de codage spatio-temporel pour système de transmission UWB comprenant une pluralité $P$ d'éléments radiatifs, ledit procédé codant un bloc de symboles d'information $\mathbf{S} = (\sigma_1,\sigma_2,...,\sigma_P)$ appartenant à un alphabet de modulation M-PPM-M'-PAM avec $M \geq 2$, en une séquence de vecteurs, les composantes d'un vecteur étant destinées à moduler en position et en amplitude un signal UWB impulsionnel pour un élément radiatif dudit système et une utilisation de canal de transmission donnés, chaque composante d'un vecteur correspondant à une position de modulation PPM, **caractérisé en ce que** lesdits vecteurs sont obtenus à partir des éléments de la matrice :

$$\mathbf{C} = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

une ligne de la matrice correspondant à une utilisation du canal de transmission et une colonne de la matrice correspondant à un élément radiatif, la matrice $\mathbf{C}$ étant définie à une permutation près de ses lignes et/ou ses colonnes et $\Omega$ étant définie comme la combinaison d'une permutation des positions de modulation de l'alphabet $M$-PPM et d'une opération de symétrie de l'alphabet de modulation $M'$-PAM pour l'une des positions de modulation .

**2.** Procédé de codage spatio-temporel selon la revendication 1, **caractérisé en ce que** ladite opération de permutation est une permutation circulaire desdites positions de modulation.

3. Procédé de codage spatio-temporel selon la revendication 2, **caractérisé en ce que** ladite permutation circulaire est un décalage circulaire desdites positions de modulation.

4. Procédé de codage spatio-temporel selon l'une des revendications précédentes, **caractérisé en ce que** le nombre $P$ d'éléments radiatifs et le nombre $M$ de positions de modulation vérifient $M - d(M) \geq P$ où $d(M)$ est défini par $d(M)$ = 0 dans le cas où $M$ est une puissance de 2 et comme le plus grand diviseur de $M$ tel que le rapport $M|d(M)$ soit impair, dans les autres cas.

5. Procédé de codage spatio-temporel selon l'une des revendications précédentes, **caractérisé en ce que** $M' = 1$, les symboles $\sigma_1, \sigma_2, ..., \sigma_P$ appartenant alors au dit alphabet de modulation $M$-PPM et les symboles $\sigma_2, ..., \sigma_P$ pouvant occuper toutes les positions de modulation hormis celle à laquelle s'applique ladite opération de symétrie.

6. Procédé de codage spatio-temporel selon l'une des revendications précédentes, **caractérisé en ce que** les éléments radiatifs sont des antennes UWB.

7. Procédé de codage spatio-temporel selon l'une des revendications 1 à 5, **caractérisé en ce que** les éléments radiatifs sont des diodes laser ou des diodes électroluminescentes.

8. Procédé de codage spatio-temporel selon la revendication 6 ou 7, **caractérisé en ce que** ledit signal impulsionnel est un signal TH-UWB.

9. Procédé de codage spatio-temporel selon la revendication 6 ou 7, **caractérisé en ce que** ledit signal impulsionnel est un signal DS-UWB.

10. Procédé de codage spatio-temporel selon la revendication 6 ou 7, **caractérisé en ce que** ledit signal impulsionnel est un signal TH-DS-UWB.

11. Système de transmission UWB comprenant une pluralité d'éléments radiatifs ($430_1$, $430_2$, .., $430_P$), **caractérisé en ce qu'**il comprend :

   - des moyens de codage (410) pour coder un bloc de symboles d'information $\mathbf{S}=(\sigma_1, \sigma_2, ..., \sigma_P)$ appartenant à un alphabet de modulation M-PPM-M'-PAM avec $M \geq 2$, en une séquence de vecteurs, chaque vecteur étant associé à une utilisation du canal de transmission et un élément radiatif donnés, chaque composante d'un vecteur correspondant à une position de modulation PPM, lesdits vecteurs étant obtenus à partir des éléments de la matrice :

$$\mathbf{C} = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

   une ligne de la matrice correspondant à une utilisation de canal de transmission et une colonne de la matrice correspondant à un élément radiatif, la matrice **C** étant définie à une permutation près de ses lignes et/ou ses colonnes et $\Omega$ étant définie comme la combinaison d'une permutation des positions de modulation de l'alphabet $M$-PPM et d'une opération de symétrie de l'alphabet de modulation $M'$-PAM pour l'une des positions de modulation ;
   - une pluralité de modulateurs ($420_1$, 4202, .., $420_P$) pour moduler en position et en amplitude un signal UWB impulsionnel, chaque modulateur étant associé à un élément radiatif et modulant en position et en amplitude ledit signal, pendant une utilisation du canal de transmission, à l'aide des composantes du vecteur associé au dit élément radiatif et à ladite utilisation du canal ;
   - chaque élément radiatif étant adapté à émettre le signal ainsi modulé par ledit modulateur associé.

12. Système de transmission UWB selon la revendication 11, **caractérisé en ce que** le nombre $P$ d'éléments radiatifs et le nombre $M$ de positions de modulation vérifient $M - d(M) \geq P$ où $d(M)$ est défini par $d(M) = 0$ dans le cas où $M$ est une puissance de 2 et comme le plus grand diviseur de $M$ tel que le rapport $M/d(M)$ soit impair, dans les autres cas.

**Claims**

1. Method of space time coding for UWB transmission system comprising a plurality $P$ of radiative elements, said method coding a block of information symbols $\mathbf{S} = (\sigma_1, \sigma_1, ..., \sigma_P)$ belonging to a M-PPM-M'-PAM modulation alphabet with $M \geq 2$, as a sequence of vectors, the components of a vector being intended to position and amplitude modulate a pulse UWB signal for a given radiative element of said system and a use of transmission channel, each component of a vector corresponding to a PPM modulation position, **characterised in that** said vectors are obtained from elements of the matrix:

$$\mathbf{C} = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

   a row of the matrix corresponding to a use of the transmission channel and a column of the matrix corresponding to a radiative element, the matrix $\mathbf{C}$ being defined to within a permutation of its rows and/or its columns and $\Omega$ being defined as the combination of a permutation of the modulation positions of the $M$-PPM alphabet and a symmetry operation of the $M'$-PAM modulation alphabet for one of the modulation positions.

2. Method of space time coding according to claim 1, **characterised in that** said permutation operation is a circular permutation of said modulation positions.

3. Method of space time coding according to claim 2, **characterised in that** said circular permutation is a circular shift of said modulation positions.

4. Method of space time coding according to one of the previous claims, **characterised in that** the number $P$ of radiative elements and the number $M$ of modulation positions confirm $M - d(M) \geq P$ where $d(M)$ is defined by $d(M) = 0$ in the case where $M$ is a power of 2 and as the highest divisor of $M$ such that the ratio $M/d(M)$ is an odd number, in the other cases.

5. Method of space time coding according to one of the previous claims, **characterised in that** $M' = 1$, the symbols $\sigma_1, \sigma_2, ..., \sigma_P$ then belonging to said $M$-PPM modulation alphabet and the symbols $\sigma_2, ..., \sigma_P$ can occupy all of the modulation positions save that to which said symmetry operation applies.

6. Method of space time coding according to one of the previous claims, **characterised in that** the radiative elements are UWB antenna.

7. Method of space time coding according to one of claims 1 to 5, **characterised in that** the radiative elements are laser diodes or light emitting diodes.

8. Method of space time coding according to claim 6 or 7, **characterised in that** said pulse signal is a TH-UWB signal.

9. Method of space time coding according to claim 6 or 7, **characterised in that** said pulse signal is a DS-UWB signal.

10. Method of space time coding according to claim 6 or 7, **characterised in that** said pulse signal is a TH-DS-UWB signal.

11. UWB transmission system comprising a plurality of radiative elements ($430_1$, $430_2$, .., $430_P$), **characterised in that** it comprises:

- coding means (410) to code a block of information symbols $\mathbf{S} = (\sigma_1, \sigma_2, ..., \sigma_P)$ belonging to a M-PPM-M'-PAM modulation alphabet with $M \geq 2$, as a sequence of vectors, each vector being associated with a given use of the transmission channel and a radiative element, each component of a vector corresponding to a PPM modulation position, said vectors being obtained from elements of the matrix:

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

a row of the matrix corresponding to a use of transmission channel and a column of the matrix corresponding to a radiative element, the matrix **C** being defined to within a permutation of its rows and/or its columns and $\Omega$ being defined as the combination of a permutation of the modulation positions of the $M$-PPM alphabet and a symmetry operation of the $M'$-PAM modulation alphabet for one of the modulation positions ;

- a plurality of modulators ($420_1$, $420_2$, .., $420_P$) to position and amplitude modulate a pulse UWB signal, each modulator being associated with a radiative element and position and amplitude modulating said signal, during a use of the transmission channel, by means of the components of the vector associated with said radiative element and said use of the channel;

- each radiative element being adapted to emit the signal thereby modulated by said associated modulator.

12. UWB transmission system according to claim 11, **characterised in that** the number $P$ of radiative elements and the number $M$ of modulation positions confirm $M - d(M) \geq P$ where $d(M)$ is defined by $d(M) = 0$ in the case where $M$ is a power of 2 and as the greatest divisor of $M$ such that the ratio $M/d(M)$ is an odd number, in the other cases.

**Patentansprüche**

1. Verfahren zur räumlich-zeitlichen Codierung für ein UWB-Übertragunssystem, das eine Mehrzahl $\boldsymbol{P}$ von Strahlungselementen enthält, wobei das Verfahren einen Block von Informationssymbolen $\mathbf{S} = (\sigma_1, \sigma_2, ..., \sigma_p)$, der zu einem Alphabet der Modulation M-PPM-M'-PAM mit $\boldsymbol{M \geq 2}$ gehört, in eine Sequenz von Vektoren codiert, wobei die Komponenten eines Vektors dazu ausgelegt sind, ein UWB-Pulssignal für ein gegebenes Strahlungselement des Systems und eine gegebene Verwendung des Übertragungskanals hinsichtlich Position und Amplitude zu modulieren, wobei jede Komponente eines Vektors einer Position der Modulation PPM entspricht, **dadurch gekennzeichnet, dass** die Vektoren erhalten werden ausgehend von den Elementen der Matrix:

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

wobei eine Zeile der Matrix einer Verwendung des Übertragungskanals entspricht und eine Spalte der Matrix einem Strahlungselement entspricht, wobei die Matrix **C** definiert ist bis auf eine Permutation ihrer Zeilen und/oder ihrer Spalten, und wobei $\Omega$ definiert ist als die Kombination einer Permutation der Positionen der Modulation des Alphabets M-PPM und einer Symmetrieoperation des Alphabets der Modulation M-PAM für eine der Modulationspositionen.

2. Verfahren zur räumlich-zeitlichen Codierung nach Anspruch 1, **dadurch gekennzeichnet, dass** die Permutationsoperation eine zirkuläre Permutation der Modulationspositionen ist.

3. Verfahren zur räumlich-zeitlichen Codierung nach Anspruch 2, **dadurch gekennzeichnet, dass** die zirkuläre Permutation eine zirkuläre Verschiebung der Modulationspositionen ist.

4. Verfahren zur räumlich-zeitlichen Codierung nach einem der vorhergehenden Ansprüche, **dadurch gekennzeichnet, dass** die Zahl **P** von Strahlungselementen und die Zahl M von Modulationspositionen $M - d\,(M) \geq P$ erfüllen, wobei $d\,(M)$ definiert ist durch $d\,(M) = 0$ falls $M$ eine Potenz von 2 ist und andernfalls als der größte Teiler von $M$ derart, dass das Verhältnis $M\,/\,d\,(M)$ ungerade ist.

5. Verfahren zur räumlich-zeitlichen Codierung nach einem der vorhergehenden Ansprüche, **dadurch gekennzeichnet, dass** $M' = 1$ ist, wobei die Symbole $\sigma_1, \sigma_2,..., \sigma_p$ dann zu dem Alphabet der Modulation M-PPM gehören, und die Symbole $\sigma_2,..., \sigma_p$ alle Modulationspositionen einnehmen können, mit Ausnahme jener, auf die die Symmetrieoperation angewandt wird.

6. Verfahren zur räumlich-zeitlichen Codierung nach einem der vorhergehenden Ansprüche, **dadurch gekennzeichnet, dass** die Strahlungselemente UWB-Antennen sind.

7. Verfahren zur räumlich-zeitlichen Codierung nach einem der Ansprüche 1 bis 5, **dadurch gekennzeichnet, dass** die Strahlungselemente Laserdioden oder Elektrolumineszenzdioden sind.

8. Verfahren zur räumlich-zeitlichen Codierung nach Anspruch 6 oder 7, **dadurch gekennzeichnet, dass** das Pulssignal ein TH-UWB-Signal ist.

9. Verfahren zur räumlich-zeitlichen Codierung nach Anspruch 6 oder 7, **dadurch gekennzeichnet, dass** das Pulssignal ein DS-UWB-Signal ist.

10. Verfahren zur räumlich-zeitlichen Codierung nach Anspruch 6 oder 7, **dadurch gekennzeichnet, dass** das Pulssignal ein TH-DS-UWB-Signal ist.

11. UWB-Übertragungssystem, umfassend eine Mehrzahl von Strahlungselementen ($430_1$, $430_2$, ... $430_p$), **dadurch gekennzeichnet, dass** es umfasst:

    - Codierungsmittel (410) zum Codieren eines Blocks von Informationssymbolen **S** = ($\sigma_1$, $\sigma_2$,..., $\sigma_p$), der zu einem Alphabet der Modulation M - PPM-M'-PAM mit $M \geq 2$ gehört, in eine Sequenz von Vektoren, wobei jeder Vektor einer gegebenen Verwendung des Übertragungskanals und einem gegebenen Strahlungselement zugeordnet ist, wobei jede Komponente eines Vektors einer Position der Modulation PPM entspricht, wobei die Vektoren erhalten sind ausgehend von den Elementen der Matrix:

$$ \mathbf{C} = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix} $$

    wobei eine Zeile der Matrix einer Verwendung des Übertragungskanals entspricht und eine Spalte der Matrix einem Strahlungselement entspricht, wobei die Matrix **C** bis auf eine Permutation ihrer Zeilen und/oder ihrer Spalten definiert ist, und wobei $\Omega$ definiert ist als die Kombination einer Permutation der Positionen der Modulation des Alphabets M-PPM und einer Symmetrieoperation des Alphabets der Modulation M'-PAM für eine der Modulationspositionen;
    - eine Mehrzahl von Modulatoren ($420_1$, $420_2$, ... $420_p$) zum Modulieren eines UWB-Pulssignals in Position und Amplitude, wobei jeder Modulator einem Strahlungselement zugeordnet ist und das Signal während einer Verwendung des Übertragungskanals mit Hilfe der Komponenten des Vektors in Position und in Amplitude moduliert, der dem Strahlungselement und der Verwendung des Kanals zugeordnet ist;

- wobei jedes Strahlungselement dazu ausgelegt ist, das derart durch den zugeordneten Modulator modulierte Signal auszugeben.

12. UWB-Übertragungssystem nach Anspruch 11, **dadurch gekennzeichnet, dass** die Zahl $P$ von Strahlungselementen und die Zahl $M$ von Modulationspositionen $M - d(M) \geq P$ erfüllen, wobei $d(M)$ definiert ist durch $d(M) = 0$, falls $M$ eine Potenz von 2 ist und andernfalls als der größte Teiler von $M$ derart, dass das Verhältnis $M / d(M)$ ungerade ist.

$$\mathbf{S} = (\sigma_1, \ldots, \sigma_b)$$

$$\mathbf{C} = \begin{pmatrix} c_{1,1} & c_{1,2} & \ldots & c_{1,P} \\ c_{2,1} & c_{2,2} & \ldots & c_{2,P} \\ \vdots & \vdots & \ddots & \vdots \\ c_{T,1} & c_{T,2} & \ldots & c_{T,P} \end{pmatrix}$$

100

110

120

$130_1$

$130_P$

$140_1$

$140_P$

<u>Fig. 1</u>

**Fig. 2A**

TH-UWB

$c_k(n) = 7,1,4,7$

$T_s$

$T_c$

**Fig. 2B**

DS-UWB

$b_x^{(k)} = +1, -1, +1, -1$

**Fig. 2C**

TH-DS-UWB

PAM $M'$

$(\mu, a)$

$\Delta$

$M$

PPM

**Fig. 3**

EP 2 245 751 B1

$$S = (\sigma_1, \sigma_2, \ldots, \sigma_P)$$

410

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

400

$\sigma_1, \Omega\sigma_P, \Omega\sigma_{P-1}, \ldots, \sigma_2$  →  420₁ →  430₁

$\sigma_2, \sigma_1, \Omega\sigma_P, \ldots, \Omega\sigma_3$  →  420₂ →  430₂

430_P

$\sigma_P, \sigma_{P-1}, \ldots, \sigma_1$  →  420_P

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B.A. SETHURAMAN et al.** Full-diversity, high-rate space-time block codes from division algebras. *IEEE Trans. on Information Theory,* Octobre 2003, vol. 49 (10), 2596-2616

- On Space-Time Coding With Pulse Position and Amplitude Modulations for Time-Hopping Ultra-Wideband Systems. *IEEE TRANSACTIONS ON INFORMATION THEORY,* 01 Juillet 2007, vol. 53 (7